# EUROPÄISCHE PATENTSCHRIFT

(11) **EP 1 592 874 B1**
(45) Veröffentlichungstag und Bekanntmachung des Hinweises auf die Patenterteilung: **14.04.2010**
(21) Anmeldenummer: 04710399.9
(22) Anmeldetag: 12.02.2004
(51) Int. Cl.: F02F 7/00

(54) **DICHTUNG ZUR ABDICHTUNG EINER VERBINDUNG ZWEIER FORMTEILE**
SEAL FOR SEALING A CONNECTION BETWEEN TWO MOULDED PARTS
JOINT POUR ASSURER L'ETANCHEITE D'UN RACCORD ENTRE DEUX PIECES MOULEES

(30) Priorität: 13.02.2003 DE 10306211
(43) Veröffentlichungstag der Anmeldung: 09.11.2005
(73) Patentinhaber: MANN+HUMMEL GmbH, 71638 Ludwigsburg (DE)
(72) Erfinder: ANGOT, Jean-Philippe, F-53810 Change (FR); TROTIN, Philippe, F-53360 Quelainsves (FR)
(86) Internationale Anmeldenummer: PCT/EP2004/050120
(87) Internationale Veröffentlichungsnummer: WO 2004/072515

(56) Entgegenhaltungen:
- EP-A2- 0 454 895
- DE-A- 3 831 414
- DE-A- 19 936 748
- DE-C- 3 927 340
- US-A1- 2002 163 139

## Beschreibung

### Stand der Technik

Die Erfindung betrifft eine Dichtung insbesondere Ventildeckeldichtung zur Abdichtung einer Verbindung zweier Formteile nach den Merkmalen des Anspruchs 1.

Dünnwandige Formteile wie zum Beispiel Ventildeckel oder Zylinderkopfhauben für Brennkraftmaschinen, weisen elastische Dichtungen zur Abdichtung bei der Verbindung mit einem weiteren Formteil auf. Die DE 197 38 275 offenbart eine elastische Dichtung zur statischen Abdichtung von dünnwandigen Deckeln von Brennkraftmaschinen. Hierbei weist der dünnwandige Deckel einen umlaufenden Befestigungsflansch mit einer umlaufenden Nut auf, wobei dieser zur Aufnahme der elastischen Dichtung gedacht ist. Es wird vorgeschlagen die elastische Dichtung mit Vorsprüngen zu versehen, welche den Außenrand des Befestigungsflansches umgreifen und wobei hakenförmige Kragen hinter den Befestigungsflansch greifen. So wird eine formschlüssige Verklammerung der Dichtung am Deckel erreicht. Nachteilig ist hier der relativ komplizierte Aufbau der Dichtung mit dem hakenförmigen Kragen und den Vorsprüngen, sowie die zeitaufwendige Anbringung der Dichtung am dünnwandigen Deckel. Hier muss nämlich die Dichtung angepaßt an die Form des Deckels, aufwendig der Kontur folgend, an dem Deckel befestigt werden. Zur Vermeidung von Undichtigkeiten muß das Hintergreifen des Flansches an jedem Punkt der Kontur des Deckels sichergestellt werden.

Die DE 41 25 344 offenbart eine metallverstärkte Gummiformdichtung zur gegenseitigen Abdichtung zweier mittels Schraubenbolzen aufeinander gepreßten Formteilen. Die Dichtung ist gebildet aus einem allseits umvulkanisierten Trägerblech, wobei die aufvulkanisierte Gummischicht längsverlaufende Dichtwulste und um die die Dichtung durchquerende Schraubenlöcher, innen halbseitig herumlaufende Dichtlippen aufweist. Derartige metallverstärkte Gummiformdichtungen dienen insbesondere dazu, um Blechhauben oder ähnliches auf Gußformteile abdichtend aufsetzen zu können. Nachteilig ist hier der Materialmix aus Metall und Kunststoff, insbesondere da diese Dichtungen im Normalfall als Austauschdichtungen gedacht sind und so die Verwertung oder das Recycling stark erschwert ist. Weiterhin wirkt sich der Materialmix negativ auf die Herstellung und damit auf die Herstellungskosten aus.

Das Dokument DE 3831414A1 zeigt eine Gummiformdichtung zur Begrenzung der Verpressung der Dichtung mit einer Blecheinlage. Die von gummielastischem Material umgebene Blecheinlage bildet buchsenförmige Verpressungsbegrenzer im Bereich der Löcher zum Durchlassen der Schrauben aus und hat damit direkten Kontakt zu den zu dichtenden Teilen. Die Blecheinlage dient ausschließlich der Stabilisierung der Dichtung und der Begrenzung der Verpressung im Bereich der Schrauben.

Aus der DE 19936748A1 ist ein Befestigungssystem bekannt, bei dem Dichtungs- und Schallentkopplungselemente direkt an ein einteiliges Bauteil angespritzt werden. Somit ist kein zusätzlicher Rahmen in der Dichtung vorhanden, da diese von dem Bauteil selber gestützt wird.

Die DE 36 39 218 offenbart eine Lösung bei der das Dichtungsmaterial unter Formung der Dichtung an der Randfläche des Ventildeckels und unter Zwischenschaltung wenigstens eines Haftvermittlers im thermisch erweichten Zustand angespritzt wird. Nach dem Abkühlen sitzt die Dichtung in erkalteter Form in der Randfläche fest. Die Randfläches des Ventildeckels bildet gleichzeitig den einen Teil des für die Ausbildung der Dichtung erforderlichen Formwerkzeugs. Diese Dichtung erleichtert zwar die Handhabung im Zusammenhang mit dem Ventildeckel, da hier keine Dichtung einer komplizierten Kontur folgend eingelegt und bis zur Verbindung gehalten werden muß, sie hat aber den großen Nachteil, dass bei einer Trennung der beiden Formteile das erneute Einbringen einer neuen unverbrauchten Dichtung kompliziert und aufwendig ist. Die alte Dichtung muß rückstandsfrei aus dem Ventildeckel entfernt werden und eine neue Dichtung muß wiederum im warmen Zustand eingespritzt werden. Dieser Vorgang ist teuer und zeitaufwendig und bedarf einer hohen Sorgfalt beim Ersetzen der Dichtung.

Die Druckschrift EP 0454895 offenbart auch eine Dichtung für einen Ventildeckel.

Aufgabe der Erfindung ist es daher, eine Dichtung zu schaffen die leicht zu wechseln ist, die einfach und günstig in der Herstellung ist und die eine erhöhte Funktionalität beinhaltet. Diese Aufgabe wird durch die Merkmale des Patentanspruchs 1 gelöst. Die Unteransprüche geben zweckmäßige Weiterbildungen an.

### Vorteile der Erfindung

Die erfindungsgemäße Dichtung dient zur Abdichtung einer Verbindung zwischen einem im wWesentlichen dünnwandigen Formteil und einem weiteren Formteil. Hierbei weist die Dichtung eine elastische Dichtlippe auf, welche zwischen den beiden Formteilen angeordnet ist. Die elastische Dichtlippe ist weiterhin an den äußeren Bereich eines formstabilen Unterstützungsrahmens angespritzt. Eine derartige Dichtung kann insbesondere bei Ventildeckeldichtungen oder Zylinderkopfdichtungen einer Brennkraftmaschine eingesetzt werden. Jedoch ist es auch möglich die erfindungsgemäße Dichtung überall dort einzusetzen, wo zwei Teile dichten miteinander verbunden werden. Gerade bei komplizierten Konturen der beiden Formteilen erweist sich die erfindungsgemäße Dichtung als vorteilhaft, da die elastische Dichtlippe durch die Verbindung mit dem formstabilen Unterstützungsrahmen die vorgegebene Form der Formteile einhält und so sehr einfach und schnell zu applizieren ist. Bevorzugt weist die Dichtlippe in Richtung der Anlageflächen mit den Formteilen eine oval zulaufende Form auf, jedoch ist auch eine runde bzw. eckige Grundform möglich. Um der Dichtlippe eine Möglichkeit zur Komprimierung beim Zusammenbau der beiden Formteile zu geben, weist sie eine größere Dicke als der formstabile Unterstützungsrahmen auf. Durch die Deformation der Dichtlippe beim Zusammensetzen der beiden Formteile wird ein Ausgleichen kleiner Unebenheiten in der Dichtfläche der Formteile und damit ein dichtes Anliegen über den gesamten Bereich der Dichtflächen der beiden Formteile zur sicheren Abdichtung erzielt. Der formstabile Unterstützungsrahmen besteht aus einem festen nicht elastischen Material und hält so die elastische Dichtlippe in einer vorgegebenen Form. Bevorzugt weist der Unterstützungsrahmen zur höheren Stabilität zwischen den Längsschenkeln des Unterstützungsrahmens Verbindungsstege aus dem selben Material auf. Diese sind jedoch fakultativ und nicht zwingend notwendig für die Funktion der Dichtung und für die unterstützende Hilfe des Unterstüztungsrahmens. Die erfindungsgemäße Lösung erleichtert das Einlegen der Dichtung in die hierzu korrespondierenden Formteile besonders, da hier nicht wie im Stand der Technik üblich eine weiche Dichtung einer zum Teil komplizierten Kontur der Dichtfläche der Formteile folgen muß, sondern in dem der Unterstützungsrahmen eben diese Kontur aufweist und so die elastische Dichtlippe exakt und schnell in die Kontur eingelegt werden kann. Ebenso wird hierdurch eine Fehleinlegung bzw. ein Quetschen einer nicht exakt eingelegten Dichtung verhindert. Daher bietet sich die erfinderische Dichtung insbesondere für Ventildeckeldichtungen und Zylinderkopfhaubendichtungen an, sie kann jedoch auch wie beschrieben zum Beispiel für Luftfiltergehäusedeckel oder als zum Beispiel Ölwannendichtung eingesetzt werden.

In einer bevorzugten Ausgestaltung der erfindungsgemäßen Dichtung ist die Dichtlippe ein elastomerer und der Unterstützungsrahmen ein thermoplastischer Kunststoff. Der elastomere Anteil könnte hierbei zum Beispiel ein synthetischer Kautschuk und der thermoplastische Anteil zum Beispiel ein Polyamid sein. Bevorzugt werden hier dem Fachmann geläufige Werkstoffe eingesetzt welche eine gewisse Resistenz gegenüber aggressiven Medien wie zum Beispiel Ölen, Fetten oder Aerosolen aufweisen. Aufgrund dieser Materialkombination der Dichtung ist es besonders einfach durch Spritzgießen mit einem geeigneten Werkzeug komplizierte Konturen der Dichtflächen der Formteile nachzubilden. In einem ersten Schritt wird im Spritzgießwerkzeug der formstabile Thermoplastische Unterstützungsrahmen gespritzt und im zweiten Schritt wird dann an den äußeren Bereich des Rahmens die elastische Dichtlippe angespritzt. So erhält man eine formstabile und leicht zu applizierende Dichtung mit einer weichen gut abdichtenden außen umlaufenden Dichtlippe.

Gemäß einer vorteilhaften Ausgestaltung der erfinderischen Dichtung weist der Unterstützungsrahmen Mittel zur lösbaren korrespondierenden Verbindung der Dichtung mit einem der Formteile auf. Die lösbare korrespondierende Verbindung kann über ein Klipssystem, über Spreizstifte oder auch über Schrauben realisiert werden, wobei jedoch eine werkzeuglose Verbindung ohne Nutzung weiterer Teile bevorzugt wird. Hierzu können beispielsweise im Unterstützungsrahmen Öffnungen zur Aufnahme von korrespondierend zu den Öffnungen im Formteil angebrachten flexiblen Haken oder dergleichen angeordnet sein. Derart ausgestattet bietet die erfinderische Dichtung eine Herausfallsicherung für den Fall des Transportes mit dem einen Formteil zur Verbindungsstätte mit dem zweiten Formteil oder auch zur Vereinfachung des Zusammenfügens der beiden Formteile in exponierter Lage. So muß bei schwieriger Einbaulage nicht mehr auf ein Verrutschen oder Herausfallen der Dichtung kurz vor Montage geachtet werden.

Eine besondere Ausführungsform der erfinderischen Dichtung weist seitlich an der Dichtlippe wenigstens einen Indikator zur Erkennung einer eingelegten Dichtung bei miteinander verbundenen Formteilen auf. Hierbei ist der Indikator im wesentlichen parallel zur Trennebene der beiden Formteile ausgerichtet und besteht vorzugsweise aus einem zur Seite ausgebildeten Fortsatz der Dichtlippe. Es ist jedoch auch denkbar, hier einen Indikator zusätzlich an die Dichtlippe anzuspritzen. Da im Stand der Technik die Dichtung in den Formteilen angebrachten Nuten in der Dichtfläche eingesetzt wird, ist es im zusammengebauten Zustand der beiden Formteile von außen nicht zu erkennen ob eine Dichtung zwischen den Formteilen vorhanden ist oder nicht. So kann das versehentliche Weglassen einer Dichtung bis zu einem schweren Motorschaden führen, wobei der hier vorgeschlagene Indikator dieses verhindern kann. Durch den Indikator kann auch bei zusammengebauten Formteilen von außen zweifelsfrei festgestellt werden, ob sich eine Dichtung zwischen den beiden Formteilen befindet. Der Indikator wird über eine entsprechende korrespondierende Öffnung in wenigstens einem der Formteile nach außen geführt um so einen sichtbaren Beweis des Vorhandenseins einer Dichtung darzustellen.

Gemäß einer zweckmäßigen Weiterbildung der erfindungsgemäßen Dichtung ist am Unterstützungsrahmen über wenigstens eine lösbare Verbindung wenigstens ein funktionales Bauteil angeordnet. Das Vorhandensein des Unterstützungsrahmens bietet die Möglichkeit funktionale Bauteile wie zum Beispiel Ölabscheider für die Abscheidung von Öl aus Aerosolen oder auch Ventile zur gesteuerten Freigabe einer Durchgangsöffnung oder sonstige Mittel zur Integration weiterer Funktionalitäten am Unterstützungsrahmen anzuordnen. Diese funktionalen Bauteile können dann am inneren Bereich des Unterstützungsrahmens innerhalb des Wirkungsbereiches der Dichtlippen lösbar mit dem Unterstützungsrahmen verbunden werden. Die Verbindung kann über Schrauben, Klipsen, Bajonettverschlüsse oder sonstige im Stand der Technik bekannten Verbindungsarten erfolgen.

Gemäß einer weiteren Ausgestaltung der erfinderischen Dichtung, ist das wenigstens eine funktionale Bauteil direkt in den Unterstützungsrahmen integriert und wird direkt beim Sprüzgießprozess des Unterstützungsrahmens mit geformt. Dieses könnten in diesem Fall dann zum Beispiel Kunststoffleitbleche oder einfache Schirmventile sein, welche einen geringen Kostenaufwand verursachen und bei einem Wechsel der Dichtung mit entsorgt werden können. Auf Grund der Materialgleichheit spricht auch nichts einem Recycling entgegen. Ebenso ist es möglich Funktionselemente aus gleichem oder aus anderem Material in den Unterstützungsrahmen mit einzuspritzen oder über ein Schweiß- oder Klebverfahren unlösbar an diesem zu befestigen.

Gemäß einer weiteren Ausgestaltung der Erfindung wird die Dichtung zwischen zwei Formteile eingelegt, wobei die beiden Formteile über Schraubverbindungen korrespondierend miteinander verbunden sind. Hierbei umschließt die Durchgangsöffnung der Formteile zur Schraubendurchführung allseitig. Es sind also in der Kontur der Dichtung Öffnungen der Dichtung vorgesehen, die korrespondierend zu den Öffnungen der Formteile für die Schraubbolzen sind. Dieses bedeutet zusätzlich eine Zentrierung und Sicherung der Dichtung und eine vorteilhafte Abdichtung der Verbindung.

Eine weitere Modifikation der erfinderischen Dichtung beinhaltet, dass der Wirkbereich der Dichtung innenseitig an den Durchgangsbohrungen der Schraubverbindungen der beiden Formteile verläuft. So dichtet die Dichtlippe den zwischen den beiden Formteilen vorhandenen Raum schon gegenüber den Durchgangsbohrungen zur Verschraubung der beiden Formteile ab.

Eine weitere Variation der erfinderischen Dichtung beinhaltet, dass der Wirkbereich der Dichtlippe außenseitig an den Durchgangsbohrungen vorbeigeführt wird und so die Durchgangsbohrungen in die Abdichtung nach außen mit angeschlossen werden. Zusätzlich sollten hier die Bohrungen der Durchgangsöffnungen einzeln nach außen abgedichtet werden um hier keine Undichtigkeiten entstehen zu lassen.

Eine besondere Ausführungsform der Erfindung beinhaltet, dass der Unterstützungsrahmen zum Großteil eine plattenförmige Form aufweist, wobei die elastomere Dichtung am Rand angeordnet ist und der Unterstützungsrahmen wenigstens eine Durchgangsöffnung zwischen den beiden Formteilen aufweist. In besonderen Anwendungsfällen ist es sinnvoll, die Durchgangsöffnung zwischen den beiden Formteilen zu limitieren. So kann beispielsweise ein Aufschäumen von Öl oder ein Durchtritt stark ölhaltigem Aerosols gehemmt werden. Durch eine entsprechende Auslegung der Größe und der Anordnung der wenigstens einen Durchgangsöffnung im Unterstützungsrahmen lassen sich solche Fälle minimieren bzw. ganz vermeiden. Hierzu kann der plattenförmige Teil des Unterstützungsrahmens auch geschlitzt, perforiert oder mit einer dreidimensionalen Kontur versehen sein, wobei die Herstellung in einem Standartspritzgießwerkzeug unproblematisch zu bewerkstelligen ist.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigt
- Figur 1: eine isometrische Ansicht der erfindungsgemäßen Dichtung,
- Figur 2: eine Ausschnittsvergößerung im Bereich der Dichtlippe im Schnitt,
- Figur 3: eine isometrische Ansicht des Zusammensetzens der erfindungsgemäßen Dichtung mit einem dünnwandigen Formteil ,
- Figur 4: eine Darstellung der erfindungsgemäßen Dichtung mit integrierten Funktionsbauteilen.

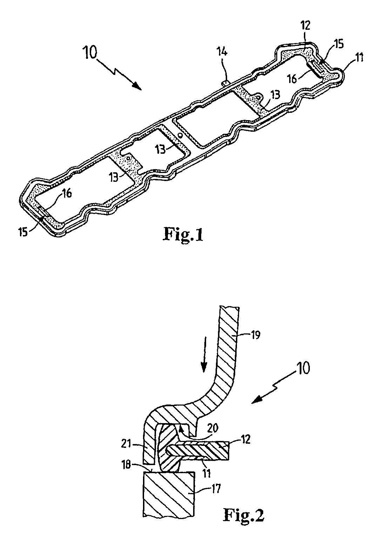

Die Figur 1 zeigt eine Ausführungsform der erfindungsgemäßen Dichtung 10 mit einer elastischen Dichtlippe 11 angespritzt an einen Unterstützungsrahmen 12. Die elastische Dichtlippe 11 weist dabei eine bestimmte Außenkontur auf, welche an die Kontur der hierzu korrespondierenden Formteile angepaßt ist. Im Inneren Bereich der Dichtung 10 sind Mittelstege 13 im Unterstützungsrahmen 12 angeordnet, diese dienen der Stabilität der Gesamtdichtung 10. Die Höhe der Dichtlippe 11 ausgehend von der Dichtungsebene überschreitet die Dicke des Unterstützungsrahmens 12 deutlich. So ist gewährleistet, dass bei einem Zusammenfügen von zwei Formteilen mit eingelegter Dichtung die Dichtlippe an jedem Punkt Ihrer Kontur stauchbar ist. Am äußeren Umfang der Dichtlippe 11 ist ein Indikator 14 angeordnet. Dieser Indikator 14 wird gemeinsam mit der Dichtlippe 11 im Spritzgießwerkzeug an den Unterstützungsrahmen 12 angespritzt. Er bedeutet keine Unterbrechung der Dichtlippe, so dass die Dichtwirkung sich in diesem Bereich nicht von den anderen Bereichen unterscheidet. An den querseitig gegenüberliegenden Seiten des Unterstützungsrahmens sind Klipsöffnungen 15 angeordnet. Diese Klipsöffnungen 15 in Form eines Querschlitzes weisen jeweils einen Quersteg 16 auf. Diese Querstege 16 dienen zur Aufnahme eines hierzu korrespondierenden Haltemittels eines der Formteile.

Die Figur 2 zeigt eine Ausschnittsvergrößerung eines Schnittes der erfindungsgemäßen Dichtung 10 in einer Einbausituation. Der Figur 1 entsprechende Bauteile sind mit gleichen Bezugszeichen versehen. Die Dichtlippe 11 liegt auf einem Formteil 17 beispielsweise einem Nockenwellengehäuse auf und ist im Bereich der Auflage 18 auf dem Formteil 17 leicht gestaucht. Korrespondierend zum Formteil 17 ist ein Deckel 19 mit Aufnahmenut 20 für die Dichtlippe 11 aufgesetzt. Die Dichtlippe 11 wird im Bereich der Aufnahmenut 20 von dieser im oberen Bereich umfaßt, dort ebenso wie in der Auflage 18 leicht gestaucht und verbindet so dichtend das Formteil 17 mit dem Deckel 19. Beim Verbinden vom Deckel 19 und Formteil 17 in Pfeilrichtung stößt ein Außenschenkel 21 des Deckels 19 auf die Auflage 18 des Formteils 17 auf. In der Figur ist ebenso noch einmal der auf die Ebene der Dichtung 10 bezogene Dickenunterschied zwischen Dichtlippe 11 und Unterstützungsrahmen 12 zu erkennen.

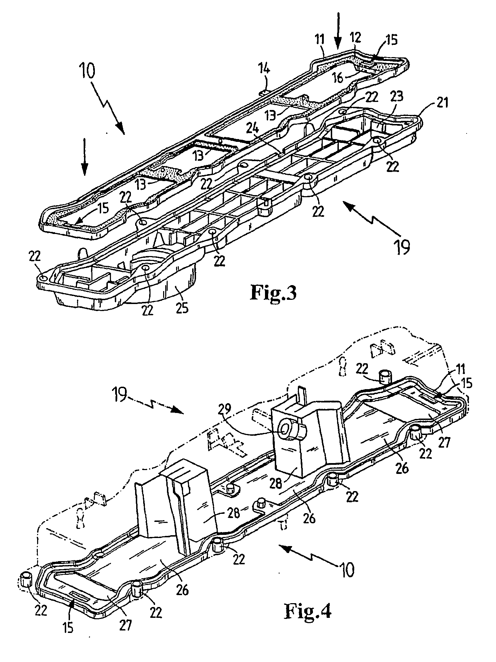

Die Figur 3 zeigt die erfindungsgemäße Dichtung bei der Verbindung mit einem Deckel. Der Figur 1 entsprechende Bauteile sind mit den gleichen Bezugszeichen versehen. Die Dichtung entspricht hierbei der in der Figur 1 beschriebenen Dichtung, wobei die Kontur der Dichtung 10 korrespondierend der Kontur des Deckels 19 folgt. Zur Verbindung des Deckels 19 mit dem hier nicht dargestellten Formteil 17 sind im äußeren Bereich umlaufend mehrere Durchgangsbohrungen 22 angeordnet. Wie zu erkennen ist, verläuft die Dichtlippe halbseitig innen an den Durchgangsbohrungen 22 vorbei, wodurch eine gesonderte Abdichtung der Durchgangsbohrungen 22 nicht erforderlich ist. Im mittleren Bereich der querseitig gegenüberliegenden Kanten des Deckels 19 ist jeweils ein Haltedorn 23 angeordnet. Dieser Haltedorn 23 ist korrespondierend zur Klipsöffnung 15 der efindungsgemäßen Dichtung 10 ausgebildet. Beim Einlegen der Dichtung 10 in den Deckel 19 in Pfeilrichtung durchstößt dabei der Haltedorn 23 die Klipsöffnung 15 und hakt danach im Quersteg 16 ein. Somit sind Deckel 19 und Dichtung 10 miteinander verbunden und es besteht nicht die Gefahr, dass bei der Montage des Deckels 19 mit eingelegter Dichtung 10 und dem Formteil 17 die Dichtung 10 herausfällt oder bei der Montage beschädigt wird. Sollte ein Wechsel der Dichtung 10 nach dem Gebrauch notwendig sein, so wird der Deckel 19 inklusive der darin befestigten Dichtung 10 vom Formteil 17 abgeschraubt und die Dichtung 10 kann durch ein Auseinanderdrücken der Haltedorne 23 zerstörungsfrei vom Deckel 19 getrennt werden. Im hinteren längsseitigen Teil des umlaufenden Außenschenkels 21 befindet sich eine Indikatoröffnung 24, welche korrespondierend zum an der Dichtung 10 angeordneten Indikator 14 ausgeführt ist. So ist nach dem Zusammenbau von außen leicht zu erkennen, ob eine Dichtung eingelegt ist oder nicht. Der Deckel 19 ist in dieser Figur als Flachdeckel ausgeführt, wobei er zum Beispiel ein Nockenwellengehäuse abdeckt und weiterhin mit einer Öleinfüllöffnung 25 versehen ist.

Die Figur 4 zeigt eine Variante der erfindungsgemäßen Dichtung mit integrierten Funktionselementen. Der Figur 1 entsprechenden Bauteile sind mit gleichen Bezugszeichen gekennzeichnet. Hier ist der Deckel 19 mit der Dichtung 10 schon verbunden. Um die Darstellung übersichtlicher zu gestalten ist der Deckel 19 strichpunktiert über den darunter liegenden Teilen dargestellt. Die Kontur der Dichtung 10 verläuft hierbei wieder im Inneren halbseitig an den Durchgangsbohrungen 22 vorbei, womit wiederum keine gesonderte Abdichtung der Durchgangsbohrungen 22 notwendig ist. Die Längsseiten der Dichtung 10 sind hierbei nicht über Querstege 16 sondern über eine durchgehende Platte 26 miteinander verbunden. Die Platte 26 ist aus dem selben Material wie der Unterstützungsrahmen 12 und wird in einem Arbeitsgang mit diesem Spritzgegossen. An den äußeren Enden der Dichtung 10 befinden sich Durchgangsöffnungen 27, welche einen Gasfluß von zum Beispiel Kurbelgehäusegasen in das vom Deckel 19 umschlossene Volumen zulassen. Die durch die Durchgangsöffnung 27 in das vom Deckel 19 eingeschlossene Volumen eingeströmten ölhaltigen Gase strömen durch zwei Luftentölelemente 28, wobei sich das in Tröpfchenform im Gas enthaltene Öl an diesen Luftentölelementen 28 niederschlägt und über die Platten 26 und die Durchgangsöffnungen 27 wieder in das darunterliegende Volumen zurückfließt. Im Anschluß daran verlassen die Gase das vom Deckel 19 eingeschlossene Volumen durch einen Entlüftungsanschluß 29 und werden beispielsweise dem Ansaugsystem der Brennkraftmaschine zugeführt. In diesem Beispiel sind also die Luftentölelemente 28 als funktionale Bauteile in der Dichtung 10 integriert und direkt mit der Platte 26 beim Erstellen des Unterstützungsrahmens 12 mit spritzgegossen worden. Die Luftentölelemente 28 sind hier als eine Art Labyrinth für das durchströmende Gas zu verstehen, wobei sich die Öltröpfchen an den das Gas führenden Wänden des Luftentölelementes 28 niederschlagen. Die Platte 26 dient hier der Trennung des vom Deckel 19 eingeschlossenen Volumens und des unterhalb der Platte 26 liegenden Volumens im Formteil 17 zur Beruhigung des durchströmenden Gases und zur Abschottung von eventuell im unteren Formteilvolumen entstehenden Ölspritzern. Aus dieser Sicht heraus sind sogar zwei verschiedene funktionale Bauteile in der Dichtung 10 verwirklicht, nämlich einerseits die Luftentölelemente 28 und andererseits die Abschirmplatten 26.

## Patentansprüche

1. Ventildeckeldichtung zur Abdichtung einer Verbindung zwischen einem Ventildeckel (19) und einem weiteren Formteil (17), wobei die Dichtung (10) eine elastische Dichtlippe (11) aufweist, welche zwischen den beiden Formteilen (19, 17) angeordnet ist, wobei die elastische Dichtlippe (11) an den äußeren Randbereich eines formstabilen Unterstützungsrahmens (12) angespritzt ist, wobei der Unterstützungsrahmen (12) zum Großteil eine plattenförmige Form aufweist, die mit einer dreidimensionalen Kontur versehen ist und der Unterstützungsrahmen (12) wenigstens eine Durchgangsöffnung (27) zwischen Formteil (17) und Ventildeckel (19) aufweist und am Unterstützungsrahmen (12) wenigstens ein funktionales Bauteil (28) angeordnet ist, **dadurch gekennzeichnet, dass** die Höhe der Dichtlippe (11), ausgehend von der Dichtungsebene, die Dicke des Unterstützungsrahmens (12) dentlich überschreitet.

2. Ventildeckeldichtung nach Anspruch 1, **dadurch gekennzeichnet, dass** die Dichtlippe (11) ein elastomerer Kunststoff und der Unterstützungsrahmen (12) ein thermoplastischer Kunststoff ist.

3. Ventildeckeldichtung nach einem der vorhergehenden Ansprüche, **dadurch gekennzeichnet, dass** der Unterstützungsrahmen (12) mit Mitteln (15) zur lösbaren korrespondierenden Verbindung der Dichtung (10) mit einem Formteil (17) oder einem Ventildeckel (19) ausgestattet ist.

4. Ventildeckeldichtung nach einem der vorhergehenden Ansprüche, **dadurch gekennzeichnet, dass** seitlich an der Dichtlippe (11) wenigstens ein Indikator (14) zur Erkennung einer eingelegten Dichtung (10) bei Verbindung von Formteil (17) und Ventildeckel (19) angeordnet ist.

5. Ventildeckeldichtung nach einem der vorhergehenden Ansprüche, **dadurch gekennzeichnet, dass** am Unterstützungsrahmen (12) das funktionale Bauteil (28) über wenigstens eine lösbare Verbindung angeordnet ist.

6. Ventildeckeldichtung nach einem der Ansprüche 1 bis 4, **dadurch gekennzeichnet, dass** am Unterstützungsrahmen (12) das funktionale Bauteil (28) direkt im Unterstützungsrahmen (12) unlösbar integriert ist.

7. Ventildeckeldichtung nach einem der vorhergehenden Ansprüche, **dadurch gekennzeichnet, dass** das Formteil (17) und der Ventildeckel (19) über eine Schraubverbindung korrespondierend miteinander verbunden sind und die Dichtung (10) die Durchgangsöffnungen (27) des Formteils (17) und des Ventildeckels (19) zur Schraubendurchführung allseitig umschließt.

8. Ventildeckeldichtung nach einem der Ansprüche 1 bis 6, **dadurch gekennzeichnet, dass** das Formteil (17) und der Ventildeckel (19) über eine Schraubverbindung korrespondierend miteinander verbunden sind und die Dichtung (10) die Durchgangsöffnungen (27) des Formteils (17) und des Ventildeckels (19) zur Schraubendurchführung einseitig innenseitig umgeht und damit abdichtet.

9. Ventildeckeldichtung nach einem der Ansprüche 1 bis 6, **dadurch gekennzeichnet, dass** das Formteil (17) und der Ventildeckel (19) über eine Schraubverbindung korrespondierend miteinander verbunden sind und die Dichtung (10) die Durchgangsöffnungen (27) des Formteils (17) und des Ventildeckels (19) zur Schraubendurchführung außenseitig umgeht.

## Claims

1. Valve-cover gasket for sealing a connection between a valve cover (19) and another molded part (17), the gasket (10) featuring an elastic sealing lip 11) which is disposed between both molded parts (19, 17), the elastic sealing lip (11) being injection-molded to the outer peripheral zone of a dimensionally stable supporting frame (12), the supporting frame (12) featuring mostly a plate-shape form which is provided with a three-dimensional contour and the supporting frame (12) featuring at least a passage opening (27) between the molded part (17) and valve cover (19) and at least one functional component (28) being disposed at the supporting frame (12) **characterized in that** the height of the sealing lip (11), based on the sealing plane, significantly exceeds the thickness of the supporting frame (12).

2. Valve-cover gasket according to claim 1, **characterized in that** the sealing lip (11) is an elastomeric synthetic material and the supporting frame (12) a thermoplastic synthetic material.

3. Valve-cover gasket according to one of the above-mentioned claims, **characterized in that** the supporting frame (12) is equipped with means (15) for a detachable corresponding connection of the gasket (10) with a molded part (17) or a valve cover (19).

4. Valve-cover gasket according to one of the above-mentioned claims, **characterized in that** at least one indicator (14) for detecting an inserted gasket (10) when the molded part (17) and the valve cover (19) are connected is disposed laterally at the sealing lip (11).

5. Valve-cover gasket according to one of the above-mentioned claims, **characterized in that** the functional component (28) is disposed at the supporting frame (12) via at least one detachable connection.

6. Valve-cover gasket according to one of the above-mentioned claims, **characterized in that** the functional component (28) is integrated at the supporting frame (12) non-detachably directly in the supporting frame (12).

7. Valve-cover gasket according to one of the above-mentioned claims, **characterized in that** the molded part (17) and the valve cover (19) are correspondingly connected with each other via a screwed connection and that the gasket (10) encloses on all sides the passage openings (27) of the molded part (17) and the valve cover (19) for the insertion of the screws.

8. Valve-cover gasket according to one of the claims 1 to 6, **characterized in that** the molded part (17) and the valve cover (19) are correspondingly connected with each other via a screwed connection and that the gasket (10) surrounds on one side internally the passage openings (27) of the molded part (17) and the valve cover (19) for the insertion of the screws, thus sealing it.

9. Valve-cover gasket according to one of the claims 1 to 6, **characterized in that** the molded part (17) and the valve cover (19) are correspondingly connected with each other via a screwed connection and that the gasket (10) surrounds externally the passage openings (27) of the molded part (17) and the valve cover (19) for the insertion of the screws.

## Revendications

1. Joint pour couvercle de vanne afin de rendre hermétique une jonction entre un couvercle de vanne (19) et une autre pièce moulée (17), le joint (10) présentant une lèvre élastique d'étanchéité (11) qui est placée entre les deux pièces moulées (19, 17), la lèvre élastique d'étanchéité (11) étant injectée sur la zone de bord extérieur d'un cadre de soutien (12) de forme stable, le cadre de soutien (12) présentant en grande partie une forme tabulaire qui est munie d'un contour tridimensionnel et le cadre de soutien (12) présentant au moins une ouverture de passage (27) entre la pièce moulée (17) et le couvercle de vanne (19), et au moins un composant fonctionnel (28) étant placé sur le cadre de soutien (12), **caractérisé en ce que** la hauteur de la lèvre d'étanchéité (11), depuis le plan d'étanchéité, dépasse nettement l'épaisseur du cadre de soutien (12).

2. Joint pour couvercle de vanne selon la revendication 1, **caractérisé en ce que** la lèvre d'étanchéité (11) est une matière synthétique élastomère et le cadre de soutien (12) une matière synthétique thermoplastique.

3. Joint pour couvercle de vanne selon l'une des revendications précédentes, **caractérisé en ce que** le cadre de soutien (12) est muni de moyens (15) pour établir une liaison de correspondance amovible entre le joint (10) et une pièce moulée (17) ou un couvercle de vanne (19).

4. Joint pour couvercle de vanne selon l'une des revendications précédentes, **caractérisé en ce qu'**au moins un indicateur (14) est placé latéralement sur la lèvre d'étanchéité (11) pour détecter un joint (10) inséré lors de la jonction entre la pièce moulée (17) et le couvercle de vanne (19).

5. Joint pour couvercle de vanne selon l'une des revendications précédentes, **caractérisé en ce que** le composant fonctionnel (28) est placé sur le cadre de soutien (12) par l'intermédiaire d'au moins une jonction amovible.

6. Joint pour couvercle de vanne selon l'une des revendications 1 à 4, **caractérisé en ce que**, sur le cadre de soutien (12), le composant fonctionnel (28) est intégré directement et de manière inamovible au cadre de soutien (12).

7. Joint pour couvercle de vanne selon l'une des revendications précédentes, **caractérisé en ce que** la pièce moulée (17) et le couvercle de vanne (19) sont reliés en correspondance mutuelle par l'intermédiaire d'une jonction vissée et que le joint (10) entoure de tous les côtés les ouvertures de passage (27) de la pièce moulée (17) et du couvercle de vanne (19) destinées au passage de la vis.

8. Joint pour couvercle de vanne selon l'une des revendications 1 à 6, **caractérisé en ce que** la pièce moulée (17) et le couvercle de vanne (19) sont reliés en correspondance mutuelle par l'intermédiaire d'une jonction vissée et que le joint (10) entoure d'un côté à l'intérieur les ouvertures de passage (27) de la pièce moulée (17) et du couvercle de vanne (19) destinées au passage de la vis et réalise ainsi l'étanchéité.

9. Joint pour couvercle de vanne selon l'une des revendications 1 à 6, **caractérisé en ce que** la pièce moulée (17) et le couvercle de vanne (19) sont reliés en correspondance mutuelle par l'intermédiaire d'une jonction vissée et que le joint (10) entoure à l'extérieur les ouvertures de passage (27) de la pièce moulée (17) et du couvercle de vanne (19) destinées au passage de la vis.
